(19) Europäisches Patentamt

European Patent Office

Office européen des brevets

(11) **EP 1 635 273 A1**

(12) **DEMANDE DE BREVET EUROPEEN**

(43) Date de publication:
**15.03.2006 Bulletin 2006/11**

(51) Int Cl.:
***G06F 17/30*** (2006.01)

(21) Numéro de dépôt: **05300705.0**

(22) Date de dépôt: **31.08.2005**

| | |
|---|---|
| (84) Etats contractants désignés:<br>**AT BE BG CH CY CZ DE DK EE ES FI FR GB GR HU IE IS IT LI LT LU LV MC NL PL PT RO SE SI SK TR**<br>Etats d'extension désignés:<br>**AL BA HR MK YU**<br><br>(30) Priorité: **10.09.2004  FR 0409607**<br><br>(71) Demandeur: **FRANCE TELECOM**<br>**75015 Paris (FR)** | (72) Inventeur: **Lassalle, Edmond**<br>**22300 Lannion (FR)**<br><br>(74) Mandataire: **Lapoux, Roland**<br>**Cabinet Martinet & Lapoux,**<br>**43 Boulevard Vauban,**<br>**B.P. 405,**<br>**Guyancourt**<br>**78055 Saint Quentin Yvelines Cedex (FR)** |

(54) **Construction informatique d'un arbre lexical**

(57)      Pour réduire l'espace mémoire de la représentation informatique d'un arbre lexical et y trouver rapidement un mot, les mots sont triés selon l'ordre lexicographique, puis l'arbre est construit par itération. Un préfixe (PF) des mots précédant (MP = Mn) et suivant (MS = M(n+1)) et un suffixe (SF) du mot suivant sont déterminés (E3, E4). Lorsque la longueur d'une chaîne déterminée (SSQ) dans le mot précédent (MP) à l'extrémité de laquelle une longueur depuis la racine (R) de l'arbre est au moins égale à la longueur du préfixe, est supérieure à celle du préfixe, la chaîne déterminée est cassée (E7, E8, E9) en des première et deuxième sous-chaînes (SC1, SC2). Le suffixe (SF) et la deuxième sous-chaîne (SC2) qui remplace la chaîne déterminée, sont enregistrés à des première et deuxième adresses (SD1, SD2) dans une table (TD) de sommet fils relative à la première sous-chaîne.

FIG. 1

**Description**

La présente invention concerne une construction informatique d'une structure de données arborescente d'un ensemble de données. Plus particulièrement, elle a trait à la construction d'un arbre lexical.

La terminologie employée dans la présente description pour la construction informatique d'un arbre est définie ci-après.

Un arbre est une structure de données représentée par un graphe composé de plusieurs sommets S reliés deux à deux par des arcs, et respectant des propriétés dites de forte connexité et non cyclicité. Par convention, les composants de l'arbre sont définis suivant un sens de parcours descendant depuis le sommet de l'arbre, appelé racine de l'arbre, vers les extrémités de l'arbre, appelées feuilles ou aussi sommets terminaux. Un sommet de l'arbre ayant au moins un sommet descendant est un noeud. Un sommet n'ayant pas de sommet descendant constitue une feuille. Un noeud peut être suivi par plus de deux sommets descendants.

Un sommet descendant direct d'un noeud est appelé sommet fils. Les sommets fils situés le plus à gauche et le plus à droite parmi les sommets fils descendant d'un noeud sont respectivement appelés sommet fils gauche et sommet fils droit.

Un chemin dans l'arbre est une suite ordonnée de sommets suivant le sens de parcours descendant depuis la racine R jusqu'à un noeud d'extrémité du chemin ou une feuille de l'arbre. Si l'on suppose qu'un arbre est construit de la gauche vers la droite, un chemin gauche passe par tous les noeuds et la feuille situés les plus à gauche de l'arbre à tous les niveaux de profondeur. Un niveau de profondeur dans l'arbre est le nombre de caractères consécutifs associés aux arcs traversés par un chemin depuis la racine, non compris celle-ci.

Pour coder un arbre, chaque arc auquel est associé un sommet qui termine l'arc suivant le sens descendant de l'arbre est référencé par une étiquette qui contient une donnée de l'ensemble de données à classer et qui est désignée par une adresse constituant un pointeur du sommet associé. L'étiquette de l'arc particulièrement associé à une feuille peut inclure des informations paramètrées et annotations utiles à des traitements ultérieurs de la donnée, comme une correction orthographique du mot que termine la feuille dans un traitement de texte.

Le squelette d'un chemin est défini comme étant une chaîne finie concaténant les étiquettes des arcs constituant le chemin.

Selon la demande de brevet WO 03/073320 déposée par le demandeur, la représentation informatique d'un arbre comportant N sommets est déduite d'une bijection de l'ensemble [1, N] dans lui-même et sert à des recherches allant de la racine vers les feuilles. Chaque donnée associée à un noeud de l'arbre est un caractère tel qu'une lettre d'un alphabet et est pointée par deux valeurs dans une table stockée dans une mémoire : une valeur représentative d'un rang préfixe du noeud et une adresse à laquelle la valeur stockée est représentative d'un rang postfixe du noeud. Les rangs préfixes des noeuds sont ordonnés selon une première relation d'ordre total qui est une combinaison d'une relation d'ordre de descendance ordonnant un noeud par rapport à ses descendants et d'une relation d'ordre de primogéniture ordonnant les noeuds fils d'un même noeud. Les rangs postfixes des noeuds sont ordonnés selon une deuxième relation d'ordre total qui est une combinaison de la relation d'ordre inverse de ladite relation d'ordre de descendance et de ladite relation d'ordre de primogéniture.

Cependant cette représentation connue n'est pas la mieux adaptée pour un arbre lexical, pour les principales raisons suivantes. Dans un arbre lexical, un chemin est la représentation de la concaténation des caractères d'un mot du lexique. La représentation connue, comme toute représentation lexicale connue, impose qu'un sommet relatif à un caractère donné ait au moins un sommet fils relatif au caractère suivant du caractère donné dans un mot du lexique.

L'ordre des rangs préfixes et l'ordre des rangs postfixes ne distinguent pas la numérotation d'un noeud de celle d'une feuille. Or une analyse arborescente a essentiellement deux objectifs. D'une part, l'analyse détermine le mot du dictionnaire correspondant à la recherche, cette information étant déduite directement de la structure arborescente. D'autre part, l'analyse complète l'information sur le mot en tant que chaîne de caractères par d'autres informations linguistiques, sémantiques, etc. Les informations linguistiques ou sémantiques sont stockées hors de la structure arborescente dans des tables accessibles via un index numérique. Chaque index numérique est déterminé par la feuille de l'arborescence. Une manière efficace d'accès à l'arbre est d'identifier les index numériques aux index de codage des feuilles de l'arborescence. Or un codage par ordre préfixe et ordre postfixe conduit à une numérotation discontinue des feuilles, comme l'indique l'exemple de la figure 3A de la demande de brevet précitée WO 03/073320, où les feuilles occupent les index 4, 5, 6, 9, 11, 12, 13, 14, 16, 18, 19, 20, 21, 22 et sont jalonnées de trous de numérotation 1, 2, 3, 7, 8, 10, 15, 17. La discontinuité de la numérotation des feuilles pénalise les traitements des mots, ne serait ce que pour gérer des tables creuses et par conséquent entraîne une perte d'espace mémoire. Par exemple, la taille des index peut être inutilement multipliée par un facteur de 7 ou 8 dans certains cas.

L'invention a pour **objectif** de réduire l'espace mémoire de la représentation informatique d'un arbre lexical et de trouver plus rapidement un mot dans l'arbre lexical comparativement aux arbres construits selon la technique antérieure.

Pour atteindre cet objectif, un procédé pour construire informatiquement un arbre représentatif d'un ensemble de mots composés chacun d'au moins un caractère, est caractérisé en ce qu'il comprend après un tri des mots selon un ordre défini sur les caractères, les étapes suivantes pour que chaque mot suivant un mot précédant soit enregistré sous la forme de chaînes de caractère concaténées, chaque chaîne à l'exception de la dernière du mot précédent étant associée à une table d'adresses de sommets fils relatifs à des chaînes de l'arbre succédant à ladite chaque chaîne suivant le sens descendant dans l'arbre depuis la racine de celui-ci :

déterminer un préfixe commun aux mots précédant et suivant et en déduire un suffixe complémentaire du préfixe dans le mot suivant,
déterminer une chaîne dans le mot précédent partiellement commune au préfixe et à l'extrémité de laquelle une longueur depuis la racine le long du chemin du mot précédent dans l'arbre est au moins égale à la longueur du préfixe,
casser la chaîne déterminée en des première et deuxième sous-chaînes et enregistrer le suffixe et la deuxième sous-chaîne, qui remplace la chaîne déterminée, à des première et deuxième adresses dans une table de sommet fils relative à la première sous-chaîne, si la longueur de la chaîne déterminée est supérieure à celle du préfixe, et
prolonger la chaîne déterminée par le suffixe et enregistrer le suffixe à une première adresse dans une table de sommet fils relative à la chaîne déterminée si les longueurs de la chaîne déterminée et du préfixe sont égales.

L'arbre selon l'invention regroupe les squelettes de chemin et peut être exploré en une seule itération sur le préfixe commun à des squelettes. Par exemple, un début de parcours avec un début de squelette comme "ab" permet de ne pas refaire la même analyse pour les mots commençant par cette chaîne, comme abandon, abbaye et aboyer. Lorsqu'un noeud possède au moins deux sommets fils, le choix de l'un des sommets fils pour poursuivre l'analyse correspond à une réduction de l'espace de recherche. Lorsque le noeud ne possède qu'un seul sommet fils, il n'y a pas réduction de l'ensemble des squelettes de chemins à analyser. Seule l'étiquette de l'arc reliant ce sommet à son descendant a la propriété utile. Un codage explicite du sommet en question en tant qu'élément d'un arbre n'est donc pas nécessaire. Un codage implicite utilisant l'étiquette comme seule information de codage est plus efficace tant du point de vue occupation espace mémoire que du point de vue performance algorithmique.

Le procédé de l'invention construit une représentation d'arbre lexical qui satisfait les contraintes algorithmiques évoquées en permettant une séparation de la fonction de guidage dans la recherche et de la fonction destinée à réduire l'espace de recherche.

En remarquant que la fonction de guidage est basée sur l'identification des chaînes de caractères tandis que la réduction de l'espace de recherche repose sur la structure arborescente, l'invention construit un arbre où avantageusement chaque sommet est représenté par une structure arborescente locale, c'est-à-dire par une table de ses sommets descendants. Pour une feuille, la table est vide. Pour que la fonction de réduction de l'espace de recherche soit effective à chaque sommet, chaque sommet de l'arbre est soit une feuille, soit un noeud possédant au moins deux descendants, ce qui exclut les sommets n'ayant qu'un seul descendant sauf si ce dernier est une feuille. Chaque sommet est associé à une étiquette afin de le relier aux étiquettes des descendants du sommet et ainsi parcourir des chemins en descendant dans l'arbre et reconstituer le squelette du chemin par concaténation desdites étiquettes. Chaque étiquette ne correspond pas à un caractère unique mais plutôt à une chaîne de caractère qui est une sous-chaîne d'un mot du lexique.

L'invention concerne également un système informatique pour construire un arbre représentatif d'un ensemble de mots composés chacun d'au moins un caractère. Il est caractérisé en que qu'il comprend un moyen pour trier des mots selon un ordre défini sur les caractères, et

pour que chaque mot suivant un mot précédant soit enregistré sous la forme de chaînes de caractère concaténées, chaque chaîne à l'exception de la dernière du mot précédent étant associée à une table d'adresses de sommets fils relatifs à des chaînes de l'arbre succédant à ladite chaque chaîne suivant le sens descendant dans l'arbre depuis la racine de celui-ci :

un moyen pour déterminer un préfixe commun aux mots précédant et suivant et en déduire un suffixe complémentaire du préfixe dans le mot suivant,
un moyen pour déterminer une chaîne dans le mot précédent partiellement commune au préfixe et à l'extrémité de laquelle une longueur depuis la racine le long du chemin du mot précédent dans l'arbre est au moins égale à la longueur du préfixe,
un moyen pour casser la chaîne déterminée en des première et deuxième sous-chaînes et enregistrer le suffixe et la deuxième sous-chaîne, qui remplace la chaîne déterminée, à des première et deuxième adresses dans une table de sommet fils relative à la première sous-chaîne, si la longueur de la chaîne déterminée est supérieure à celle du préfixe, et
un moyen pour prolonger la chaîne déterminée par le suffixe et enregistrer le suffixe à une première adresse dans une table de sommet fils relative à la chaîne déterminée si les longueurs de la chaîne déterminée et du préfixe sont égales.

L'invention concerne encore un programme d'ordinateur sur un support d'informations comportant des instructions de programme adaptées à construire informatiquement un arbre représentatif d'un ensemble de mots composés chacun d'au moins un caractère. Le programme, lorsqu'il est chargé et exécuté dans un système informatique, réalise après un tri des mots selon un ordre défini sur les caractères, les étapes énoncées précédemment selon le procédé de construction informatique d'arbre conforme à l'invention.

D'autres caractéristiques et avantages de la présente invention apparaîtront plus clairement à la lecture de la description suivante de plusieurs réalisations préférées de l'invention, données à titre d'exemples non limitatifs, en référence aux **dessins** annexés correspondants dans lesquels :

- la figure 1 est un algorithme de construction informatique d'un arbre de données selon l'invention;
- les figures 2 à 6 sont des schémas d'arbre lexicaux en cours de construction résultant de l'exécution de l'algorithme de la figure 1; et
- la figure 7 est un algorithme d'accès dans un arbre construit.

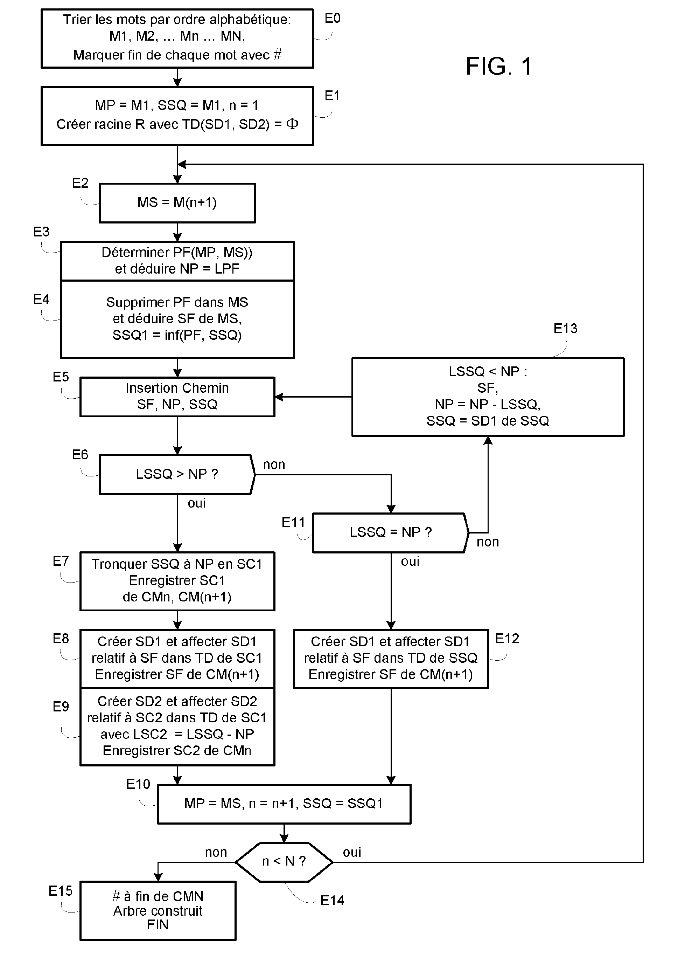

Comme montré à la figure 1, le procédé de construction informatique d'un arbre lexical selon l'invention comprend des étapes principales E1 à E15. Ces étapes sont pour la plupart mises en oeuvre sous la forme d'un programme d'ordinateur implémenté dans système informatique, en particulier un ordinateur personnel, et lié par exemple à un système de correction de fautes lexicales qui peut être intégré à un système de traitement de texte ou à un système d'exercice linguistique ou à un système pour rechercher des mots proches en réponse à une requête dans un moteur de recherche. L'ordinateur incorpore ou peut accéder localement ou à travers un réseau de télécommunications à une base de données du type de celles utilisées en intelligence artificielle. L'ordinateur peut être un dispositif ou objet électronique de télécommunications personnel à l'utilisateur du procédé, par exemple un assistant numérique personnel communiquant PDA. Il peut être également tout autre terminal domestique portable ou non tel qu'une console de jeux vidéo, ou un récepteur de télévision intelligent coopérant avec une télécommande à afficheur ou un clavier alphanumérique servant également de souris à travers une liaison infrarouge.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type internet.

Alternativement, le support d'informations peut être un circuit intégré dans lequel le programme est incorporé, le circuit étant adapté pour exécuter ou pour être utilisé dans l'exécution du procédé selon l'invention.

Un arbre représentatif d'un ensemble de mots M1 à MN composés chacun d'un ou de plusieurs caractères C codés numériquement est construit informatiquement dans l'ordinateur par itération en utilisant une correspondance entre un mot Mn et un chemin CMn à construire dans l'arbre en cours de construction.

La construction fait correspondre à chaque mot Mn un unique chemin qui relie la racine R de l'arbre à l'une des feuilles de l'arbre et dont le squelette est composé par des arcs consécutifs représentatifs de chaînes de caractère en tant que données dont la concaténation est le mot Mn. Cette correspondance permet de définir par construction une application $\Phi$ associant chaque sous-ensemble En de mots dans l'ensemble de mots à traiter à un sous-arbre de l'arbre lexical.

Préalablement à une étape E0, les mots M1 à MN de l'ensemble de mots sont saisis et enregistrés a priori en désordre dans la base de données et sont triés suivant un ordre défini sur les caractères, en l'espèce suivant l'ordre lexicographique (alphabétique), comme dans un lexique, dictionnaire, ou annuaire. Pour un mot Ma composé de I caractères consécutifs $a_1 a_2 .. a_I$ et un mot Mb composé de J caractères consécutifs $b_1 b_2 .. b_J$, le mot Ma est dit mot précédent qui précède le mot Mb dit mot suivant s'il existe un indice k ($k \leq I$ et $k \leq J$) tel que $a_1 a_2 .. a_k$ et $b_1 b_2 .. b_k$ sont des chaînes de caractère identiques et $a_{k+1}$ précède $b_{k+1}$ dans l'ordre lexicographique défini sur les caractères. Dans la suite, le mot Mn est le mot précédent du mot suivant M(n+1) dans le lexique M1 à MN, avec $1 \leq n < N$.

Les mots de lexique étant ainsi triés et ordonnés au préalable suivant une suite de mots M1 à MN, on définit une suite croissante de sous-ensembles de mots E1 c E2...c EN par :

$$E_1 = \{ M1 \}$$
$$...$$
$$En = E(n-1) \cup \{ Mn \}.$$

Le graphe des sous-ensembles E1 à EN par l'application $\Phi$ définit une suite de sous-arbres Arbre1 à ArbreN et une relation d'inclusion entre les sous-arbres. La relation d'inclusion entre sous-arbres étant la suivante : Arbren est inclus dans Arbre(n+1) si Arbre(n+1) contient tous les chemins de Arbren.

Pour construire l'arbre lexical à partir de la suite croissante de sous-ensembles de mots E1 c E2 ... $\subset$ En c E(n+1) ... $\subset$ EN, on définit l'intersection de sous-arbres Arbren et Arbre(n+1) comme l'ensemble des sommets et des arcs reliant les sommets communs aux sous-arbres Arbren et Arbre(n+1). L'intersection de deux sous-arbres est un arbre, qui est vide le cas échéant.

L'invention s'intéresse particulièrement à des sous-arbres "dégénérés" qui sont des chemins reliant la racine R à l'une des feuilles de l'arbre.

Construire l'arbre lexical à partir de la suite E1 c E2 ... c En consiste à "ajouter" un nouveau chemin CM(n+1) représentatif du mot M(n+1) à l'arbre en construction. Le nouveau chemin est déterminé par son squelette défini par des chaînes de caractère en tant que données dont la concaténation est le mot Mn du lexique. Initialement, le squelette du premier chemin CM1 est le mot M1.

Si M1 et M2 sont deux mots du lexique, l'intersection du chemin CMn et du chemin CM(n+1) est égal au chemin de préfixe CPF(CMn, CM(n+1)).

Selon les définitions ci-dessus, $a_1a_2..a_k$ est le préfixe commun au mot précédent Ma = $a_1a_2.. a_k ..a_l$ et au mot suivant Mb = $b_1b_2.. b_k.. b_J$, a une longueur k et constitue une sous-chaîne des mots Ma et Mb.

Pour les mots suivants classés dans l'ordre lexicographique:

    chaland
    chalumeau
    chameau
    champêtre

on a les préfixes:

    PF (chaland, chalumeau) = chal ;
    PF (chaland, chameau) = cha ; et les suffixes:
    SF(chaland, chameau) = meau ;
    SF(chameau, chaland) = land.

On remarquera aussi que le mot chaland précède chameau qui précède à son tour champêtre et que le préfixe PF(chaland, champêtre) est une sous-chaîne du préfixe PF(chameau, champêtre).

Pour les trois mots M1, M2 et M3 tels que M1 précède M2 et M2 précède M3, le préfixe PF(M1, M3) est une sous-chaîne du préfixe PF(M2, M3), et le préfixe PF (M1, M3) est identique au préfixe PR(PR (M1, M2), PF (M2, M3)).

Si Arbren est l'arbre formé par la réunion des chemins CMi avec $1 \leq i \leq n$, alors l'intersection de Arbren et du chemin CM(n+1) est égale à l'intersection des chemins CMn et CM(n+1). En effet, pour tout $i \leq n$, le mot Mi précède le mot Mn qui précède le mot M(n+1).

En conséquence, l'intersection des chemins CMi et CM(n+1) égale au chemin de préfixe CPF(Mi, M(n+1))) est contenue dans l'intersection des chemins CMn et CM(n+1) puisque le préfixe PF(Mi, M(n+1)) est une sous-chaîne du préfixe PF(Mn, M(n+1)) d'après la propriété précédente entre trois préfixes de mots.

L'ensemble des sommets appartenant au chemin CM(n+1) et n'appartenant pas à Arbren est égal à l'ensemble des sommets appartenant au chemin CM(n+1) et n'appartenant pas au chemin CMn. De plus, ces sommets constituent un sous-chemin dont le squelette est égal au suffixe SF(CMn, CM(n+1)).

La **construction de l'arbre lexical** comporte les étapes principales E0 à E15, comme montré à la figure 1.

Préalablement à l'étape E0, les mots M1 à MN sont saisis, codés numériquement caractère par caractère, et enregistrés a priori en désordre dans la base de données de l'ordinateur et sont triés suivant un ordre défini sur les caractères, en l'espèce suivant l'ordre lexicographique, comme déjà dit.

L'étape suivante E1 préalable à l'itération sur les chemins entre les étapes E2 et E14 initialise diverses variables dans des registres de l'ordinateur, comme un mot précédent MP mis identique au premier mot M1 du lexique constituant l'ensemble ordonné des mots, une chaîne de caractère variable glissante SSQ pour sommet de squelette d'arbre mis identique au premier mot M1 et constituant l'élément essentiel dans une étiquette correspondant à un arc glissant de noeud en noeud le long de la partie commune à un chemin précédent CMn et au chemin CM(n+1) suivant le chemin précédent CMn et relatif au mot suivant M (n+1) dans l'ensemble ordonné, et un indice de chemin/mot n mis à 1, avec $1 \leq n < N$. Le procédé de construction recourt également à d'autres registres pour des variables SD1, SD2, PF, NP, SF et SSQ1 définies ci-après.

On rappelle que chaque sommet S de l'arbre à construire est à l'extrémité (inférieure) d'un arc orienté de l'arbre précédant ledit sommet et associé à une étiquette incluant une chaîne de caractère respective, telle que la chaîne SSQ, ayant un ou plusieurs caractères et issue de la décomposition minimale d'un mot lors de la construction de l'arbre selon l'invention. L'étiquette est désignée par une adresse SD constituant un pointeur du sommet associé. Le chemin représentatif d'un mot dans l'arbre est adressable par un ensemble de pointeurs désignant respectivement les étiquettes incluant les chaînes de caractère consécutives composant le mot depuis la racine de l'arbre. Lorsque l'arbre est parcouru, en descendant un chemin dans celui-ci vers une feuille, chaque sommet dit noeud est associé à une table TD d'adresse SD désignant un ou des sommets fils descendants afin de passer d'une chaîne de caractère à la suivante le long du chemin. Dans la suite, une étiquette est assimilée à la chaîne de caractère que l'étiquette contient, bien que l'étiquette puisse inclure d'autres éléments en relation notamment avec des propriétés de la chaîne de caractère et à des paramètres et annotations utiles à des traitements ultérieurs de la chaîne de caractère en tant que donnée.

Egalement l'étape E1 crée la racine R de l'arbre et initialise une table de sommets descendants TD(SD1, SD2) qui est vide pour la racine. La table est une pile d'adresse afin que le premier sommet désigné par l'adresse SD1 et ayant été le dernier à être enregistré dans la table soit à droite du deuxième sommet désigné par l'adresse SD2 et enregistré après le sommet SD1. La table TD est initialement vide puisque puisqu'on suppose que tous les sommets aux extrémités des premiers arcs de l'arbre ayant pour origine la racine R ne sont jamais des fils et ces premiers arcs contiennent la racine.

Brièvement, pour construire itérativement l'arbre lexical en enrichissant le lexique avec le mot M(n+1), le chemin CMn est ajouté directement au chemin suivant CM(n+1). Cette adjonction de chemin consiste principalement à déterminer le préfixe commun aux mots Mn et M(n+1) et à prolonger le sous-chemin de squelette CPF (CMn, CM(n+1)) par le sous-chemin ayant pour squelette SF(Mn, M(n+1)). L'arbre lexical est construit directement par l'arbre squelette composé par les chemins, sans recourir à une représentation intermédiaire. Lorsqu'un mot est ajouté dans le lexique, un noeud à l'extrémité du préfixe PF(Mn, M(n+1)) est ajouté aux deux sommets fils du noeud, ou un sommet fils est ajouté à la suite d'un sommet ou de la racine. La construction de l'arbre est basée sur une fonction de nature itérative entre les étapes E2 et E14 qui fait appel à une fonction de détermination de suffixe aux étapes E3 et E4, puis à une fonction d'insertion de chemin de nature récursive aux étapes E5 à E10.

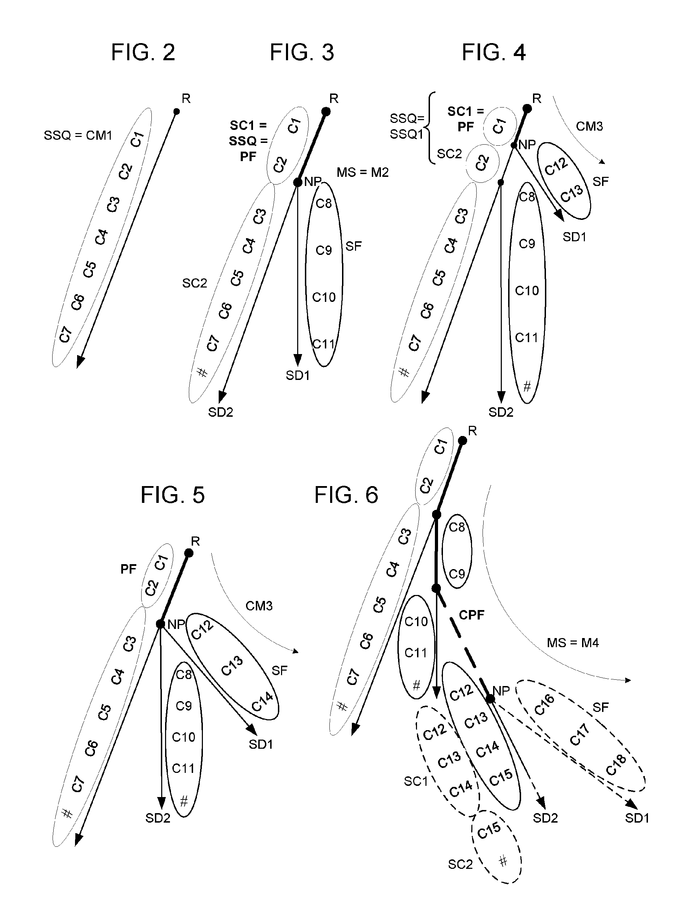

Au début de l'itération de chemin à l'étape E2, un registre de mot suivant MS=M(n+1) est rempli par le mot M(n+1) suivant le mot précédent Mn. Ainsi au début de la première itération de mot, le premier mot M1 du lexique constitue à la fois une chaîne de caractère glissante SSQ pour sommet de squelette d'arbre et est comparé au mot M2. Comme montré à la figure 2, le mot M1 est par exemple composé de sept caractères C1, C2, C3, C4, C5, C6 et C7 constituant une chaîne de caractère dont l'adresse est incluse dans la table de descendants TD associée à la racine R.

Les deux étapes suivantes E3 et E4 déterminent un suffixe SF du mot suivant M(n+1) constituant une feuille du sous-arbre Arbre(n+1) de l'arbre en cours de construction.

L'étape E3 compare le mot précédent MP=Mn au mot suivant MS=M(n+1) et détermine le préfixe PF (Mn, M(n+1)) commun au mot précédent MP et au mot suivant MS et la longueur LPF du chemin de préfixe CPF (CMn, CM(n+1) exprimée en nombre de caractère. La longueur LPF du chemin de préfixe est rangée dans un registre du niveau de profondeur NP de l'extrémité du chemin de préfixe par rapport à l'origine de la chaîne de caractère glissante SSQ qui glisse sur le chemin précédent CMn au fur et à mesure de la réduction du niveau de profondeur, comme on le verra à l'étape de boucle d'itération E13.

L'étape E4 supprime le préfixe PF dans le mot suivant MS pour en déduire un suffixe du mot suivant, soit $b_{k+1}..b_J$ du mot Mb selon les définitions ci-dessus. Comme illustré à la figure 3, le suffixe SF(C8, C9, C10, C11) d'un mot suivant MS = M2(C1, C2, C8, C9, C10, C11) par rapport à un mot précédent MP = M1(C1, C2, C3, C4, C5, C6, C7) est la terminaison qui redonne le mot suivant MS lorsque cette terminaison est concaténée avec le préfixe commun PF(C1, C2). L'étape E4 enregistre la plus petite des chaînes PF et SSQ en tant que première chaîne de caractère SSQ1 = inf(PF, SSQ) du chemin suivant qui deviendra un chemin précédent dans la prochaine itération de chemin, comme indiqué à l'étape E10.

Dans l'exemple de première itération de chemin à la figure 2, la chaîne variable SSQ est M1 et la première chaîne de caractère SSQ1 est PF.

Les étapes suivantes E5 à E10 concernent un programme pour insérer le chemin représentatif du mot suivant MS = (n+1) en cassant la chaîne de caractère glissante SSQ du chemin précédent CMn dont le début est commun au chemin de préfixe CPF, en des première et deuxième sous-chaînes de caractère SC1 et SC2 du chemin précédent MP. La première sous - chaîne SC1 constitue une dernière chaîne de caractère du chemin de préfixe CPF succédant au dernier noeud commun aux chemins MP et MS. La deuxième sous-chaîne SC2 du chemin précédent CMn peut constituer une feuille de l'arbre ou être vide.

L'étape E5 regroupe les registres contenant les variables SF, NP et SSQ utilisées dans les étapes suivantes. La longueur LSSQ de la chaîne glissante SSQ est déterminée pour être comparée au niveau de profondeur NP qui initialement à l'étape E3 indique la longueur du chemin de préfixe CPF, c'est - à - dire le niveau de profondeur de l'extrémité du préfixe par rapport à la racine R, comme indiquée aux étapes E6 et E11.

Si à l'étape E6, la longueur LSSQ de la chaîne de caractère glissante SSQ est strictement supérieure au niveau de profondeur NP, des étapes E7, E8 et E9 sont exécutées.

La chaîne de caractère SSQ du chemin précédent CMn est cassée en des première et deuxième sous-chaînes de caractère SC1 et SC2 aux étapes E7 et E9.

La première sous-chaîne SC1 est déduite par troncature du mot précédent MP au niveau NP. Elle constitue une dernière chaîne de caractère du chemin de préfixe CPF succédant au dernier noeud commun aux chemins CMn et CM(n+1) et correspond à une troncature de la chaîne SSQ au niveau NP, à l'étape E7. La sous - chaîne SC1 est enregistrée comme une chaîne de caractère aussi bien pour le chemin précédent CMn que pour le chemin suivant CM(n+1) et est donc désignée par une adresse de premier fils descendant du dernier noeud du chemin CMn précédant le niveau NP.

La première sous-chaîne SC1 est confondue avec le préfixe PF(MP, MS) lorsque le chemin de préfixe ne s'étend que sur la première chaîne du chemin précédent CMn située à la racine R. Cette configuration est illustrée à la figure 4 où le chemin d'un troisième mot MS = M3 (C1, C12, C13) doit être introduit dans l'arbre après le mot MP = M2 (C1, C2, C8, C9, C10, C11) ayant pour chemin CM2((C1, C2), (C8, C9, C10, C11)), le caractère C12 succédant au caractère C2 selon l'ordre des caractères. La chaîne de caractère (C12, C13) succédant au chemin de préfixe CPF(C1) est enregistrée en tant que suffixe SF du chemin de mot suivant CM3 à l'étape E7. La chaîne de caractère SSQ(C1, C2) = SSQ1 du chemin précédent CM2 plus longue que le chemin de préfixe CPF(C1) est cassée en des sous-chaînes de caractère SC1(C1) et SC2(C2) aux étapes E7 et E9.

Selon une variante de l'exemple ci-dessus, le troisième mot est un mot MS = M3(C12, C13) dont le chemin prend directement naissance à la racine R de l'arbre, en supposant que le caractère C12 succède au caractère C1 selon l'ordre des caractères. Dans cette variante, le préfixe entre les mots MP = M2(C1, C2, C8, C9, C10, C11) et MS = M3(C12, C13) est vide, et la première sous-chaîne SC1 est vide et "confondue" avec la racine.

Un premier sommet fils SD1 est créé et affecté à l'extrémité du suffixe SF qui est enregistré comme dernière chaîne provisoire du mot suivant MS = M(n+1), à l'étape E8. L'adresse SD1 de la sous-chaîne SC2 est donc relative à un premier sommet fils du sommet relatif à la première sous-chaîne SC1 et est enregistrée dans la table TD associée à la sous-chaîne SC1.

A l'étape E9, un deuxième sommet SD2 est créé et affecté à l'extrémité de la deuxième sous-chaîne de caractère SC2 dont la longueur LSC2 est la différence des longueurs LSSQ et NP. La deuxième sous-chaîne SC2 est ainsi le complément du chemin de préfixe CPF dans ladite chaîne de caractère glissante SSQ à l'extrémité du chemin précédent CMn. La sous-chaîne SC2 remplace la chaîne SSQ et ainsi hérite de la table de sommets fils TD de la chaîne SSQ. L'adresse SD2 est enregistrée dans la table TD associée à la première sous-chaîne SC1 pour désigner le sommet de la sous-chaîne SC2 qui est un fils du noeud relatif à la sous-chaîne SC1. Les sommets SD1 et SD2 sont ainsi enregistrés comme des premier et deuxième fils du sommet relatif à la première sous-chaîne SC1, les chaînes SF et SC1 succédant à la chaîne SC1 respectivement dans les chemins CMn et CM(n+1).

La deuxième sous-chaîne SC2 est une feuille de l'arbre et enregistrée comme dernière chaîne du chemin précédent CMn si le sommet SD2 n'est pas déjà un noeud de l'arbre et donc n'est pas associé à au moins deux sommets fils. En effet, graphiquement la sous-chaîne SC2 est située maintenant latéralement à gauche de la chaîne de suffixe SF et ne peut pas être concernée par la construction ultérieure du sous-arbre Arbre(n+2) de l'arbre lexical associé au mot M(n+2) dont au moins l'un des caractères succède au caractère de même rang dans le préfixe, sur au plus la longueur du chemin de préfixe CPF à partir de la racine R. Cette configuration est illustrée à la figure 6 où le chemin d'un troisième mot MS = M3(C1, C2, C8, C9, C12, C13, C14, C15) doit être introduit dans l'arbre après le chemin CM2((C1, C2), (C8, C9, C10, C11)) du mot MP = M2(C1, C2, C8, C9, C10, C11), le caractère C12 succédant au caractère C10 selon l'ordre des caractères. La chaîne de caractère (C10, C11) succédant au chemin de préfixe CPF((C1, C2), (C8, C9)) dans le chemin précédent CM2 est enregistrée en tant que dernière chaîne SC2 du chemin précédent CMn relative au deuxième sommet SD2 pour la table TD associée à la chaîne (C8, C9) et donc en tant que feuille de l'arbre. Un caractère de terminaison # de l'arbre est ajouté à la fin de la chaîne SC2(C10, C11) pour marquer la feuille et la repérer facilement dans l'arbre construit lors d'un accès à l'arbre puisque la chaîne SC2 n'a pas de sommet fils.

Selon l'exemple ci-dessus de la figure 6, après les étapes E7 à E9, le chemin CM2 représentatif du mot précédent MP = M2(C1, C2, C8, C9, C10, C11) est parcouru depuis la racine R suivant trois données respectivement identiques aux chaînes successives (C1, C2), (C8, C9) et (C10, C11, #) dont les deux premières sont enregistrées en association à des tables de descendant TD à deux adresses de sommet fils ce qui occupe moins d'espace de mémoire dans l'ordinateur que 7 cases de mémoire de caractère incluant respectivement les caractères C1, C2, C8, C9, C10, C11 et # et associées chacune à une adresse de fils, excepté les caractères C2 et C8 qui sont associés à deux adresses fils. La dernière chaîne SF(C12, C13, C14, C15) du chemin suivant CM3 est enregistrée en tant qu'unique donnée adressable SD1 par la table TD associée à la chaîne SC1 (C8, C9) de la structure de données constituée par l'arbre et est aussi plus économique en mémoire que si les quatre caractères composant la chaîne SC1 étaient enregistrés séparément dans quatre cases de mémoire de caractère respectives, dont les trois premiers avec une adresse de sommet fils.

Après les étapes E7 à E9, l'étape E10 transfère le contenu du registre de mot suivant MS dans le registre de mot précédent MS, incrémente d'une unité le registre d'indice de chemin/mot n et transfère le contenu du registre de première chaîne de mot suivant SSQ1 dans le registre de chaîne glissante sur mot précédent SSQ.

En revenant à l'étape E6, puis à l'étape E11, si la longueur LSSQ de la chaîne de caractère glissante SSQ est égale au niveau de profondeur NP, une étape E12 similaire à l'étape E7 est exécutée avant l'étape E10.

Cette égalité de longueur est par exemple montrée à la figure 5. Le chemin de préfixe CPF(C1, C2) commun au chemin précédent CMn = M2((C1, C2), (C8, C9, C10, C11)) et au chemin suivant CM(n+1) = M3((C1, C2), (C12, C13, C14)), le caractère C12 succédant au caractère C8 selon l'ordre des caractères, est aussi long que la première chaîne de caractère SSQ(C1, C2) = SSQ1 du chemin précédent CM2. Un sommet SD1 est créé et affecté à l'extrémité du suffixe SF(C12, C13, C14) qui est enregistré comme dernière chaîne provisoire du mot suivant MS=M3 relativement à un sommet en tant que premier fils SD1 dans la table TD du sommet relatif à la chaîne de préfixe (C1, C2), à l'étape E12. Dans cette dernière table TD, les sommets fils relatifs aux chaînes (C8, C9, C10, C11) et (C3, C4, C5, C6, C7) initialement premier et deuxième fils deviennent deuxième et troisièmes fils. Aucune chaîne dans le chemin précédent CM2 n'est cassée. La dernière chaîne de caractère (C8, C9, C10, C11) du chemin précédent CM2 est définitivement enregistrée comme feuille de l'arbre et marquée par un caractère de terminaison # puisque cette dernière chaîne n'a pas de sommet fils.

Si aux étapes E6 et E11, la longueur LSSQ de la chaîne de caractère glissante SSQ est strictement inférieure au niveau de profondeur NP, l'étape E13 suivie par l'étape E5 est exécutée de manière à descendre d'un noeud le long du chemin du mot suivant M(n+1). Plus généralement, la fonction récursive pour insérer le chemin CM(n+1) représentatif du mot suivant MS = M(n+1) comprenant notamment les étapes E5 et E6/E11 est exécutée autant de fois que le chemin de préfixe CPF(CMn, CM(n+1)) contient de noeuds, y compris la racine, du chemin CMn du mot précédent MP = Mn afin de faire glisser la chaîne de caractère variable SSQ de longueur LSSQ d'arc en arc et donc de chaîne en chaîne le long du chemin précédent CMn jusqu'à la dernière chaîne commune à celui-ci et au chemin de préfixe CPF. Cette dernière chaîne commune contient une partie terminale du préfixe et est à casser en appliquant les étapes E7 à E9 ou à prolonger par le suffixe SF du chemin suivant CM(n+1) en appliquant l'étape E12.

Le glissement de la chaîne SSQ est exprimé à l'étape E13 en diminuant le niveau de profondeur NP à NP - LSSQ afin de raccourcir fictivement la partie du chemin précédent CMn restant à parcourir le long du chemin de préfixe CPF(CMn, CM(n+1)), et en écrasant dans le registre de chaîne de caractère glissante la chaîne de caractère glissante SSQ par la chaîne liée au premier sommet fils SD1 du sommet lié à la chaîne de caractère glissante dans le chemin précédent CMn, c'est-à-dire graphiquement au sommet le plus à droite sous la chaîne de caractère glissante SSQ dans le sous-arbre Arbren de l'arbre en construction.

L'itération de l'étape E13 dans le programme d'insertion du chemin représentatif du mot suivant est illustrée en pointillé à titre d'exemple en référence à la figure 6, bien que les sous-arbres et l'arbre ne soient pas affichés sur l'écran de l'ordinateur. La construction informatique de l'arbre, et donc dynamique sans aucune intervention de l'utilisateur de l'ordinateur, est relative selon la figure 6 à quatre mots successifs M1(C1, C2, C3, C4, C5, C6, C7), M2 (C1, C2, C8, C9, C10, C11), M3 (C1, C2, C8, C9, C12, C13, C14, C15) et M4 (C1, C2, C8, C9, C12, C13, C14, C16, C17, C18), en supposant que le caractère C8 succède au caractère C3, le caractère C12 succède au caractère C10 et le caractère C16 succède au caractère C15 selon l'ordre des caractères.

Au début d'une première itération pour introduire le chemin du mot suivant MS = M4 suivant le chemin précédent CMn = CM3((C1, C2), (C8, C9), (C12, C13, C14, C15)), la chaîne de caractère glissante SSQ est identique à la première chaîne SSQ1(C1, C2) du chemin précédent CMn de longueur LSSQ = 2 et est plus courte que le niveau NP égale à la longueur du préfixe PF(MP, MS) = PF(M3, M4) = (C1, C2, C8, C9, C12, C13, C14). L'étape E13 est exécutée pour diminuer le niveau de profondeur de NP = 7 à NP - LSSQ = 7 - 2 = 5 et pour remplacer la chaîne de caractère glissante SSQ par la deuxième chaîne (C8, C9) du mot précédent, en tant que chaîne associée au premier sommet fils de la table TD relative à la chaîne sous-jacente (C1, C2). Puis au cours d'une deuxième itération de l'étape E5, la chaîne de caractère glissante SSQ (C8, C9) de longueur LSSQ = 2 est encore plus courte que le niveau de profondeur de NP = 5 correspondant à la chaîne terminale à 5 caractères C8, C9, C12, C13 et C14 du chemin de préfixe raccourci. L'étape E13 diminue à nouveau le niveau de profondeur de NP = 5 à NP - LSSQ = 5 - 2 = 3 et remplace la chaîne de caractère glissante SSQ par la troisième chaîne (C12, C13, C14, C15) du chemin précédent CMn en tant que chaîne relative au premier fils de la table TD associée à la chaîne sous-jacente (C8, C9). A l'étape E6 au cours d'une troisième itération de l'étape E5, la chaîne de caractère glissante SSQ(C12, C13, C14, C15) est alors plus longue que le niveau de profondeur de NP = 3 correspondant au 3 caractères terminaux C12, C13 et C14 du chemin de préfixe CPF(CMn, CM(n+1)) = CPF (CM3, CM4) ce qui conduit à l'exécution des étapes E7 à E9. Ces trois dernières étapes

cassent la dernière chaîne de caractère SSQ(C12, C13, C14, C15) du mot précédent M3 en des première et deuxième sous-chaînes de caractère SC1(C12, C13, C14) et SC2 (C15),

tronquent la dernière chaîne de caractère SSQ(C12, C13, C14, C15) au niveau NP = 3 en la première sous-chaîne SC1(C12, C13, C14) qui est enregistrée comme troisième chaîne (donnée) des chemins CM3 et CM4 relativement à un premier sommet fils dans la table TD associée à la chaîne (C8, C9),

créent et affectent un sommet SD1 à l'extrémité du suffixe SF(C16, C17, C18) qui est enregistré comme dernière chaîne provisoire du mot suivant M4, et comme premier sommet fils SD1 dans la table TD du sommet relatif à la sous-chaîne SC1 (C12, C13, C14), et,

créent et affectent un sommet SD2 à l'extrémité de la deuxième sous-chaîne de caractère SC2 (C15) qui est enregistrée avec un caractère de terminaison # comme feuille de l'arbre et comme quatrième chaîne (donnée) du chemin CM3 relatif à un deuxième sommet fils SD2 dans la table TD du sommet relatif à la sous-chaîne (C12, C13, C14).

Finalement après l'étape E10 succédant aux étapes E7 à E9 ou à l'étape E12, tant que l'indice de chemin/mot n est inférieur à N, les étapes E2 à E13 sont exécutées pour le chemin CMn de chaque mot de l'ensemble de mots M1 à MN, comme indiqué à l'étape E14. Après l'introduction du chemin du dernier mot MN dans l'arbre, un caractère de terminaison # est inséré à la fin du chemin CMN du mot MN et la construction informatique de l'arbre est terminée, comme indiqué à l'étape E15.

Chaque chaîne de caractère dans l'arbre entre deux noeuds, ou entre la racine et un sommet, est associée à une table de descendant incluant la liste des adresses SD des chaînes suivantes relatives aux sommets fils de manière à descendre dans l'arbre. L'arbre est ainsi organisé informatiquement comme un répertoire depuis la racine R avec une hiérarchie de fichiers incluant les chaînes de caractère découpées par la construction de l'arbre.

Un **accès lexical à partir d'un mot à analyser MA** consiste à explorer l'arbre de la racine R vers les feuilles de l'arbre afin de déterminer progressivement un chemin de la racine vers l'une des feuilles de l'arbre, dont le squelette concatène des chaînes de caractère du mot à analyser MA. Tant qu'un noeud est relatif à une chaîne incluse dans le mot MA, la descente dans l'arbre est poursuivie.

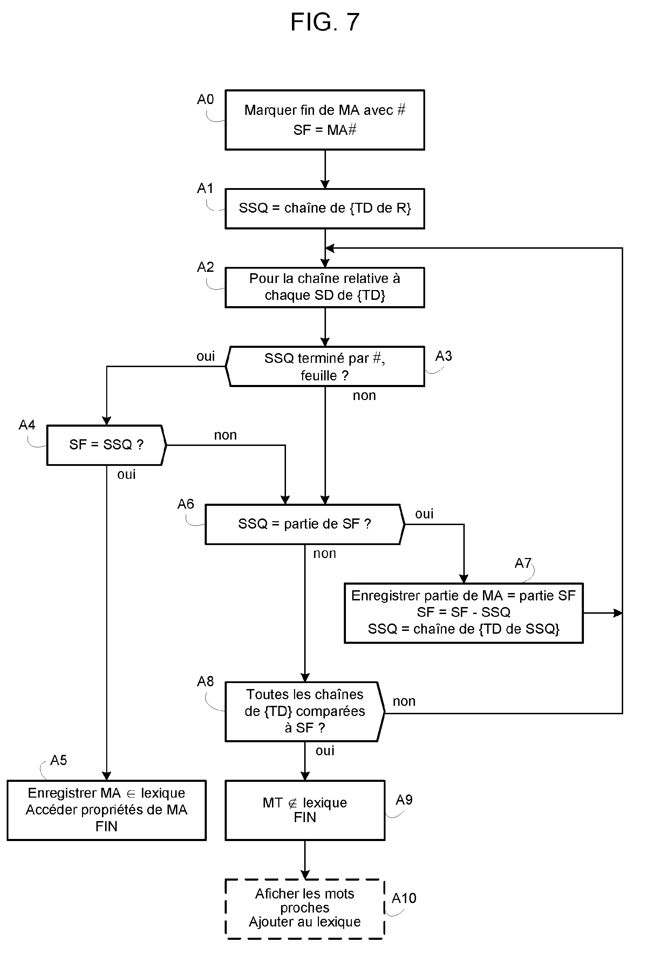

L'accès lexical basé sur un arbre squelette comporte des étapes principales A0 à A9 selon l'algorithme d'accès montré à la figure 7. Il est décomposable en deux fonctionnalités. La première fonctionnalité de nature récursive aux étapes A3 à A8 filtre tous les descendants d'un noeud et donc détermine parmi ceux-ci le noeud descendant SD dont l'étiquette correspond à une partie du mot à analyser. La seconde fonctionnalité aux étapes A2 et A7, une fois le noeud descendant SD identifié, recommence l'analyse du noeud descendant et identifie ses propres descendants afin de naviguer dans l'arbre.

Initialement à l'étape A0, la fin du mot à analyser et à reconnaître MA est complétée par un caractère de terminaison #, et le mot MA est écrit dans un registre de suffixe variable SF. A l'étape initiale A1, un deuxième registre relatif à une chaîne de caractère variable SSQ est initialement rempli avec les chaînes de caractère ayant pour origine la racine R de l'arbre lexical et donc "descendant" de la racine. Ce registre contient ainsi les adresses de la table de descendant TD associée à la racine et désignant les premières chaînes dans les chemins de l'arbre construits selon la figure 1 et donc ordonnés selon l'ordre des mots ordonnés M1 à MN, du bas vers le haut de la pile constituant la table TD, c'est-à-dire selon l'ordre des caractères, afin de commencer à comparer le mot MA à ces premières chaînes de chemin, comme la chaîne (C1, C2) dans la figure 6.

L'étape A2 débute l'itération de la comparaison du mot à analyser MA à la chaîne de caractère SSQ relative à l'un des sommets SD de la table TD et ayant pour origine la racine R, en commençant par exemple par celle qui est la plus à gauche dans l'arbre. Ainsi chaque itération est relative à la comparaison à une chaîne de caractère d'un chemin de l'arbre et non à un seul caractère, ce qui accroît la rapidité d'accès à l'arbre.

Immédiatement à l'étape suivante A3, le dernier caractère de la chaîne de caractère variable de chemin SSQ est lu afin de savoir si celle-ci est une feuille de l'arbre et par conséquent correspond à un chemin mono-chaîne et donc à un mot du lexique. Si la chaîne SSQ est une feuille, celle-ci est comparée au mot SF = MA# à l'étape A4, et en cas d'identité, le mot MA est réputé comme appartenant au lexique par exemple pour accéder à des propriétés de chaînes du mot MA, comme indiqué à l'étape A5.

Si la chaîne de caractère variable de chemin SSQ n'est pas une feuille à l'étape A3 ou diffère du mot SF = MA# à l'étape A4, l'étape A6 compare la chaîne variable SSQ à une première partie du mot SF ayant le même nombre de caractère que la chaîne variable SSQ. En cas d'identité, la partie SSQ du mot SF est enregistrée comme une première chaîne du mot MA, le mot SF est tronqué de la partie SSQ du mot SF, et le deuxième registre est rempli des adresses de la table TD pour les chaînes de caractère qui sont relatives à des sommets descendants SD fils du sommet (noeud) relatif à la chaîne SSQ venant d'être enregistrée comme première chaîne du mot MA et qui sont donc considérées comme deuxièmes chaînes dans des chemins de l'arbre, à l'étape A7. L'algorithme d'accès est ensuite bouclé sur l'étape A2 et commence l'analyse de la deuxième chaîne d'un premier deuxième noeud descendant.

Si la chaîne variable SSQ est différente de la première partie du mot SF à l'étape A6, l'algorithme d'accès tente une analyse de la première chaîne suivante "descendant" de la racine R et lue dans le deuxième registre, comme indiqué par l'enchaînement des étapes A6, A8 et A2, jusqu'à trouver éventuellement une première chaîne suivante "descendant" de la racine R identique à une première chaîne du mot MA, comme déjà précisé à l'étape A7.

L'itération des étapes A2 à A8 est recommencée autant de fois que le mot SF peut être découpé en des parties consécutives respectivement identiques à des chaînes de caractère composant un chemin de l'arbre.

Si à l'étape A8 aucune chaîne SSQ de même niveau hiérarchique n'est trouvée identique à une partie correspondante de même niveau dans le mot SF = MA# raccourci progressivement par des exécutions de l'étape A7, le mot MA est considéré comme n'appartenant pas au lexique, à l'étape A9. Par exemple, comme indiqué à une éventuelle étape ultérieure A10, une liste de mots proches ayant des premières chaînes (parties) en commun avec le mot MA trouvées par exécution de l'étape A7 peut être affichée, et/ou le mot MA peut être ajouté au lexique selon un procédé de construction de chemin basé sur le procédé de construction de l'arbre selon l'invention.

Si finalement la chaîne de caractère variable de chemin SSQ est identique à une dernière partie du mot SF = MA# à la suite d'une dernière exécution des étapes A2, A3 et A4, le mot MA appartient au lexique et est enregistré sous forme découpé en lesdites parties ainsi trouvées et donc en des chaînes de caractère d'un unique chemin de l'arbre lexical à l'étape A5.

## Revendications

**1.** Procédé pour construire informatiquement un arbre représentatif d'un ensemble de mots composés chacun d'au moins un caractère, **caractérisé en ce qu'**il comprend après un tri (E0) des mots selon un ordre défini sur les caractères, les étapes suivantes pour que chaque mot (MS=M(n+1)) suivant un mot précédant (MP=Mn) soit enregistré sous la forme de chaînes de caractère concaténées, chaque chaîne à l'exception de la dernière du mot précédent étant associée à une table d'adresses (TD) de sommets fils (SD) relatifs à des chaînes de l'arbre succédant à ladite chaque chaîne suivant le sens descendant dans l'arbre depuis la racine (R) de celui-ci :

déterminer (E3, E4) un préfixe (PF) commun aux mots précédant et suivant et en déduire un suffixe (SF) complémentaire du préfixe dans le mot suivant,

déterminer (E5, E6, E11, E13) une chaîne (SSQ) dans le mot précédent (MP) partiellement commune au préfixe et à l'extrémité de laquelle une longueur depuis la racine (R) le long du chemin du mot précédent dans l'arbre est au moins égale à la longueur (LPF) du préfixe,

casser (E7, E8, E9) la chaîne déterminée en des première et deuxième sous-chaînes (SC1, SC2) et enregistrer le suffixe (SF) et la deuxième sous-chaîne (SC2), qui remplace la chaîne déterminée, à des première et deuxième adresses (SD1, SD2) dans une table de sommet fils (TD) relative à la première sous-chaîne, si la longueur de la chaîne déterminée est supérieure à celle du préfixe, et

prolonger (E12) la chaîne déterminée par le suffixe et enregistrer le suffixe à une première adresse dans une table de sommet fils (TD) relative à la chaîne déterminée si les longueurs de la chaîne déterminée et du préfixe sont égales.

**2.** Procédé conforme à la revendication 1, selon lequel l'étape de déterminer une chaîne comprend itérativement si la longueur de la première chaîne (SSQ1) du mot précédent (MP) est inférieure (E6, E11) à la longueur (LPF) du préfixe, pour chaque chaîne suivante (SSQ) dans le mot précédent, une diminution (E13) de la longueur (NP) du préfixe de la longueur (LSSQ) de la chaîne suivante et une comparaison de la longueur (LSSQ) de la chaîne suivante à la longueur du préfixe diminuée, jusqu'à trouver une chaîne suivante qui est la chaîne déterminée dont la longueur est au moins égale à la longueur du préfixe.

**3.** Procédé conforme à la revendication 1 ou 2, selon lequel un caractère de terminaison est ajouté à la fin de la deuxième sous-chaîne (SC2) lorsque celle-ci n'a pas de sommet fils.

**4.** Arbre informatique représentatif d'un ensemble de mots composés chacun d'au moins un caractère, **caractérisé en ce qu'**il est construit informatiquement après un tri (E0) des mots selon un ordre défini sur les caractères, selon les étapes suivantes pour que chaque mot (MS=M (n+1)) suivant un mot précédant (MP=Mn) soit enregistré sous la forme de chaînes de caractère concaténées, chaque chaîne à l'exception de la dernière du mot précédent étant associée à une table d'adresses (TD) de sommets fils (SD) relatifs à des chaînes de l'arbre succédant à ladite chaque chaîne suivant le sens descendant dans l'arbre depuis la racine (R) de celui-ci :

déterminer (E3, E4) un préfixe (PF) commun aux mots précédant et suivant et en déduire un suffixe (SF) complémentaire du préfixe dans le mot suivant,

déterminer (E5, E6, E11, E13) une chaîne (SSQ) dans le mot précédent (MP) partiellement commune au préfixe et à l'extrémité de laquelle une longueur depuis la racine (R) le long du chemin du mot précédent dans l'arbre est au moins égale à la longueur (LPF) du préfixe,

casser (E7, E8, E9) la chaîne déterminée en des première et deuxième sous-chaînes (SC1, SC2) et enregistrer le suffixe (SF) et la deuxième sous-chaîne (SC2), qui remplace la chaîne déterminée, à des première et deuxième adresses (SD1, SD2) dans une table de sommet fils (TD) relative à la première sous-chaîne, si la longueur de la chaîne déterminée est supérieure à celle du préfixe, et

prolonger (E12) la chaîne déterminée par le suffixe et enregistrer le suffixe à une première adresse dans une table de sommet fils (TD) relative à la chaîne déterminée si les longueurs de la chaîne déterminée et du préfixe sont égales.

**5.** Système informatique pour construire informatiquement un arbre représentatif d'un ensemble de mots composés chacun d'au moins un caractère, **caractérisé en ce qu'**il comprend

un moyen (E0) pour trier des mots selon un ordre défini sur les caractères, et

pour que chaque mot (MS=M(n+1)) suivant un mot précédant (MP=Mn) soit enregistré sous la forme de chaînes de caractère concaténées, chaque chaîne à l'exception de la dernière du mot précédent étant associée à une table d'adresses (TD) de sommets fils (SD) relatifs à des chaînes de l'arbre succédant à ladite chaque chaîne suivant le sens descendant dans l'arbre depuis la racine (R) de celui-ci :

un moyen (E3, E4) pour déterminer un préfixe (PF) commun aux mots précédant et suivant et en déduire un suffixe (SF) complémentaire du préfixe dans le mot suivant,

un moyen (E5, E6, E11, E13) pour déterminer une chaîne (SSQ) dans le mot précédent (MP) partiellement commune au préfixe et à l'extrémité de laquelle une longueur depuis la racine (R) le long du chemin du mot précédent dans l'arbre est au moins égale à la longueur (LPF) du préfixe,

un moyen pour casser (E7, E8, E9) la chaîne déterminée en des première et deuxième sous-chaînes (SC1, SC2) et enregistrer le suffixe (SF) et la deuxième sous-chaîne (SC2), qui remplace la chaîne déterminée, à des première et deuxième adresses (SD1, SD2) dans une table de sommet fils (TD) relative à la première sous-chaîne, si la longueur de la chaîne déterminée est supérieure à celle du préfixe, et

un moyen (E12) pour prolonger la chaîne déterminée par le suffixe et enregistrer le suffixe à une première adresse dans une table de sommet fils (TD) relative à la chaîne déterminée si les longueurs de la chaîne déterminée et du préfixe sont égales.

6. Programme d'ordinateur sur un support d'informations comportant des instructions de programme adaptées à construire informatiquement un arbre représentatif d'un ensemble de mots composés chacun d'au moins un caractère, ledit programme, lorsqu'il est chargé et exécuté dans un système informatique, réalisant après un tri (E0) des mots selon un ordre défini sur les caractères, les étapes suivantes pour que chaque mot (MS=M(n+1)) suivant un mot précédant (MP=Mn) soit enregistré sous la forme de chaînes de caractère concaténées, chaque chaîne à l'exception de la dernière du mot précédent étant associée à une table d'adresses (TD) de sommets fils (SD) relatifs à des chaînes de l'arbre succédant à ladite chaque chaîne suivant le sens descendant dans l'arbre depuis la racine (R) de celui-ci :

déterminer (E3, E4) un préfixe (PF) commun aux mots précédant et suivant et en déduire un suffixe (SF) complémentaire du préfixe dans le mot suivant,

déterminer (E5, E6, E11, E13) une chaîne (SSQ) dans le mot précédent (MP) partiellement commune au préfixe et à l'extrémité de laquelle une longueur depuis la racine (R) le long du chemin du mot précédent dans l'arbre est au moins égale à la longueur (LPF) du préfixe,

casser (E7, E8, E9) la chaîne déterminée en des première et deuxième sous-chaînes (SC1, SC2) et enregistrer le suffixe (SF) et la deuxième sous-chaîne (SC2), qui remplace la chaîne déterminée, à des première et deuxième adresses (SD1, SD2) dans une table de sommet fils (TD) relative à la première sous-chaîne, si la longueur de la chaîne déterminée est supérieure à celle du préfixe, et

prolonger (E12) la chaîne déterminée par le suffixe et enregistrer le suffixe à une première adresse dans une table de sommet fils (TD) relative à la chaîne déterminée si les longueurs de la chaîne déterminée et du préfixe sont égales.

FIG. 1

E0
Trier les mots par ordre alphabétique:
M1, M2, ... Mn ... MN,
Marquer fin de chaque mot avec #

E1
MP = M1, SSQ = M1, n = 1
Créer racine R avec TD(SD1, SD2) = Φ

E2
MS = M(n+1)

E3
Déterminer PF(MP, MS))
et déduire NP = LPF

E4
Supprimer PF dans MS
et déduire SF de MS,
SSQ1 = inf(PF, SSQ)

E13
LSSQ < NP :
SF,
NP = NP - LSSQ,
SSQ = SD1 de SSQ

E5
Insertion Chemin
SF, NP, SSQ

E6
LSSQ > NP ?          non

oui

E11
LSSQ = NP ?          non

oui

E7
Tronquer SSQ à NP en SC1
Enregistrer SC1
de CMn, CM(n+1)

E8
Créer SD1 et affecter SD1
relatif à SF dans TD de SC1
Enregistrer SF de CM(n+1)

E12
Créer SD1 et affecter SD1
relatif à SF dans TD de SSQ
Enregistrer SF de CM(n+1)

E9
Créer SD2 et affecter SD2
relatif à SC2 dans TD de SC1
avec LSC2 = LSSQ - NP
Enregistrer SC2 de CMn

E10
MP = MS, n = n+1, SSQ = SSQ1

non          n < N ?          oui
E14

E15
# à fin de CMN
Arbre construit
FIN

12

# FIG. 2

SSQ = CM1

R

C1
C2
C3
C4
C5
C6
C7

# FIG. 3

**SC1 =**
**SSQ =**
**PF**

R

C1
C2

NP

MS = M2

C8
C9  SF
C10
C11

SC2

C3
C4
C5
C6
C7
#

SD1

SD2

# FIG. 4

SSQ=
SSQ1

**SC1 =**
**PF**

SC2

R

C1
C2

NP

CM3

C12
C13  SF

SD1

C8
C9
C10
C11
#

C3
C4
C5
C6
C7
#

SD2

# FIG. 5

R

**PF**

C1
C2

NP

CM3

C12
C13
C14  SF

SD1

C3
C4
C5
C6
C7
#

C8
C9
C10
C11
#

SD2

# FIG. 6

R

C1
C2

C8
C9

**CPF**

C3
C4
C5
C6
C7
#

MS = M4

C10
C11
#

NP

C12
C13
C14
C15

C16
C17  SF
C18

SD1

SC1

C12
C13
C14

SD2

SC2

C15
#

# FIG. 7

A0 — Marquer fin de MA avec #
SF = MA#

A1 — SSQ = chaîne de {TD de R}

A2 — Pour la chaîne relative à chaque SD de {TD}

A3 — SSQ terminé par #, feuille ?
oui / non

A4 — SF = SSQ ?
oui / non

A6 — SSQ = partie de SF ?
oui / non

A7 — Enregistrer partie de MA = partie SF
SF = SF - SSQ
SSQ = chaîne de {TD de SSQ}

A8 — Toutes les chaînes de {TD} comparées à SF ?
oui / non

A5 — Enregistrer MA ∈ lexique
Accéder propriétés de MA
FIN

A9 — MT ∉ lexique
FIN

A10 — Aficher les mots proches
Ajouter au lexique

**Office européen**

**des brevets**

**RAPPORT DE RECHERCHE EUROPEENNE**

Numéro de la demande

EP 05 30 0705

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | LAM S W ET AL SOCIETY OF PHOTO-OPTICAL INSTRUMENTATION ENGINEERS (SPIE): "REPRESENTING LEXICONS BY MODIFIED TRIE FOR FAST PARTIAL STRING MATCHING" CHARACTER RECOGNITION TECHNOLOGIES. SAN JOSE, FEB. 1 - 2, 1993, BELLINGHAM, SPIE, US, 1993, pages 229-237, XP000628870 ISBN: 0-8194-1139-6 * le document en entier * ----- | 1,4-6 | G06F17/30 |
| X | DUNDAS III J A: "IMPLEMENTING DYNAMIC MINIMAL-PREFIX TRIES" SOFTWARE PRACTICE & EXPERIENCE, WILEY & SONS, BOGNOR REGIS, GB, vol. 21, no. 10, 1 octobre 1991 (1991-10-01), pages 1027-1040, XP000297892 ISSN: 0038-0644 * le document en entier * ----- | 1,4-6 | |
| X | US 6 560 610 B1 (EATHERTON WILLIAM N ET AL) 6 mai 2003 (2003-05-06) * le document en entier * ----- | 1,4-6 | **DOMAINES TECHNIQUES RECHERCHES (Int.Cl.7)** G06F |
| A | FR 2 836 573 A (FRANCE TELECOM) 29 août 2003 (2003-08-29) * le document en entier * ----- | 1-6 | |
| A | AL-SUWAIYEL M ET AL: "ALGORITHMS FOR TRIE COMPACTION" ACM TRANSACTIONS ON DATABASE SYSTEMS, ASSOCIATION FOR COMPUTING MACHINERY. NEW YORK, US, vol. 9, no. 2, juin 1984 (1984-06), pages 243-263, XP000718724 ISSN: 0362-5915 ----- | 1-6 | |

Le présent rapport a été établi pour toutes les revendications

| Lieu de la recherche | Date d'achèvement de la recherche | Examinateur |
|---|---|---|
| Munich | 9 novembre 2005 | Eichenauer, L |

**ANNEXE AU RAPPORT DE RECHERCHE EUROPEENNE
RELATIF A LA DEMANDE DE BREVET EUROPEEN NO.**    EP 05 30 0705

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-11-2005

| Document brevet cité au rapport de recherche | Date de publication | Membre(s) de la famille de brevet(s) | | Date de publication |
|---|---|---|---|---|
| US 6560610 B1 | 06-05-2003 | US | 6728732 B1 | 27-04-2004 |
| FR 2836573 A | 29-08-2003 | AU | 2003222939 A1 | 09-09-2003 |
| | | EP | 1483693 A2 | 08-12-2004 |
| | | WO | 03073320 A2 | 04-09-2003 |
| | | JP | 2005525625 T | 25-08-2005 |
| | | US | 2005149471 A1 | 07-07-2005 |

EPO FORM P0460

Pour tout renseignement concernant cette annexe : voir Journal Officiel de l'Office européen des brevets, No.12/82